# DEMANDE DE BREVET EUROPEEN

(11) **EP 0 561 658 A1**
(43) Date de publication de la demande: **22.09.1993**
(21) Numéro de dépôt: 93400390.6
(22) Date de dépôt: 17.02.1993
(51) Int. Cl.: G09B 23/28

(54) **Appareillage de simulation d'états notamment de pathologies respiratoires**

(30) Priorité: 18.02.1992 FR 9201808
(71) Demandeur: F.M.C. PRODUCTION Société à Responsabilité Limitée, F-92190 Meudon (FR); DRIM COMMUNICATION Société à Responsabilité Limitée, F-75008 Paris (FR); ANIMACTOR Société à Responsabilité Limitée, F-75020 Paris (FR)
(72) Inventeur: Refait, Denis, F-75006 Paris (FR); Dhont, Patrick, F-75013 Paris (FR); Roudot, Pierre, F-75020 Paris (FR)
(74) Mandataire: Keib, Gérard

(57) **Abrégé**

L'invention concerne un appareillage d'enseignement de la séméiologie auscultatoire respiratoire.

L'appareillage comprend un mannequin 1, un simulateur de sthétoscope 2 ayant une cupule 23 et des écouteurs 22 reliés à un récepteur 21, et un appareil de commande 3 relié au mannequin. Le mannequin comporte une enveloppe 11 animée par moteur, et des capteurs de proximité de la cupule 23. L'appareil 3 contient une unité de commande, une mémoire pour des groupes de données sonores associés à un état respiratoire, reliée à elle pour lui délivrer les données, et un émetteur relié à elle pour recevoir un signal de données sonores élaboré à partir de ces données. L'unité de commande est reliée au mannequin 1 pour recevoir les signaux des capteurs et en fonction de leur provenance élaborer le signal de données sonores et délivrer un signal d'actionnement du moteur élaboré à partir des données sonores.

## Description

L'invention concerne un appareillage de simulation d'états, pathologiques ou non, respiratoires, destiné à l'enseignement médical de la séméiologie auscultatoire respiratoire.

On connaît des appareillages de simulation destinés à l'enseignement médical et en particulier des appareillages d'entraînement à l'anesthésie et des appareillages d'enseignement de la séméiologie auscultatoire circulatoire. Ces appareillages sont généralement complexes, lourds, encombrants, et ainsi intransportables et onéreux. De plus, ils ne sont pas adaptables de manière simple à une utilisation collective.

L'invention a pour but de créer un appareillage d'enseignement de la séméiologie auscultatoire respiratoire qui ne présente pas ces inconvénients, et concerne à cet effet un appareillage de simulation d'états respiratoires pathologiques ou non, caractérisé en ce qu'il comprend un mannequin reproduisant extérieurement approximativement la moitié supérieure du corps d'un patient, un simulateur de stéthoscope muni d'au moins un écouteur et d'une cupule reliés à un appareil récepteur d'un rayonnement porteur de signal, et au moins un appareil de commande relié électriquement au mannequin, en ce que le mannequin comporte une enveloppe en matériau souple et élastique simulant la peau du patient, au moins un dispositif moteur pour animer le mannequin en déplaçant au moins une zone de l'enveloppe en matériau souple, et des capteurs disposés sous l'enveloppe pour détecter la proximité de la cupule, en ce que la cupule comporte au moins un organe adapté à coopérer avec les capteurs de sorte qu'au moins le capteur le plus proche de la cupule déclenche la transmission d'un signal de proximité à l'appareil de commande, et l'écouteur est un transducteur électroacoustique relié électriquement à l'appareil récepteur, en ce que l'appareil de commande comprend une unité de commande, au moins une unité de mémoire dans laquelle sont stockés des groupes de données sonores associés chacun à un état respiratoire reliée électriquement à l'unité de commande pour lui délivrer, en fonction d'instructions de commande, un groupe de données sonores correspondantes, et un émetteur de rayonnement porteur de signal également relié électriquement à l'unité de commande pour en recevoir un signal de données sonores élaboré par elle à partir du groupe de données sonores qu'elle a reçues, et en ce que l'unité de commande est reliée au mannequin pour en recevoir le signal de proximité, et en fonction de sa provenance, élaborer le signal de données sonores destiné à l'émetteur et délivrer au mannequin un signal d'actionnement du dispositif moteur élaboré à partir des données sonores.

Ainsi, l'invention aboutit à la simulation physique extérieure d'un patient au moyen d'un mannequin, et la simulation du comportement de ce mannequin au moyen d'un appareil de commande comprenant un système électronique de gestion et des périphériques gérés par ce système électronique, plus précisément la simulation des zones pulmonaires par des réseaux de capteurs, la simulation sonore d'une respiration au moyen d'un simulateur de stéthoscope, et la simulation mécanique d'une respiration par soulèvement et abaissement d'une partie du mannequin au moyen d'un dispositif moteur.

D'autres buts, avantages et caractéristiques de l'invention ressortiront de la description qui va suivre d'une forme de réalisation de l'appareillage selon l'invention donnée à titre d'exemple non limitatif en référence aux dessins ci-joints dans lesquels :
- la figure 1 montre schématiquement l'apparence extérieure d'un appareillage selon l'invention,
- la figure 2 montre un schéma par blocs de l'électronique de l'appareillage selon l'invention,

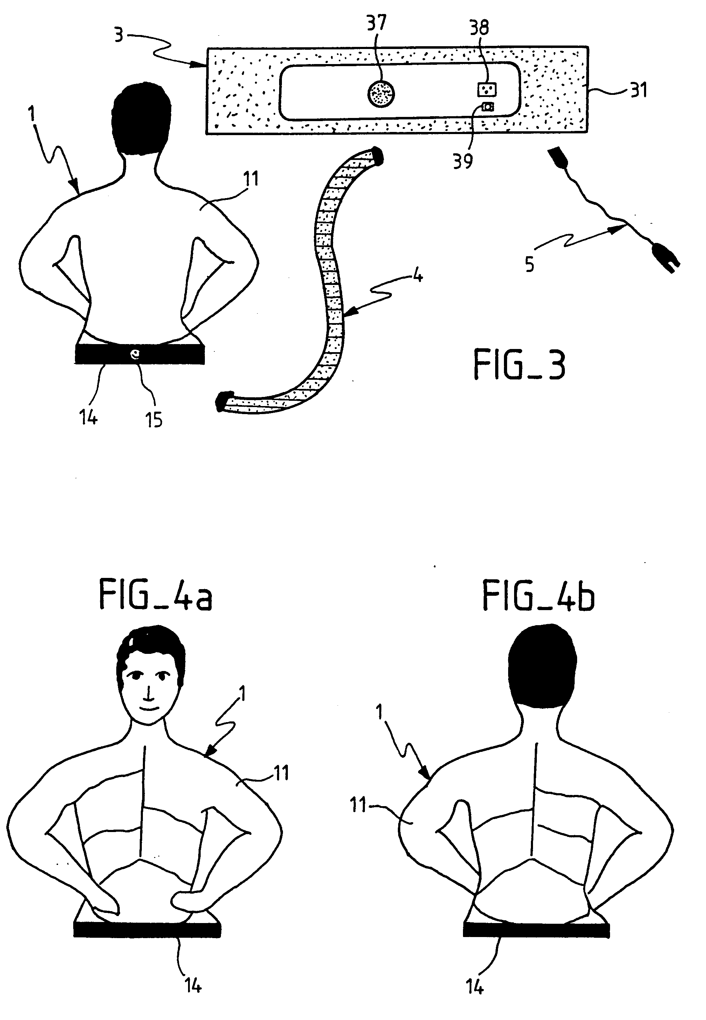

- la figure 3 montre schématiquement le branchement des organes constituant l'appareillage de la figure 1,
- les figures 4a et 4b montrent schématiquement la répartition des lobes pulmonaires d'un patient et du mannequin de l'appareillage de la figure 1,

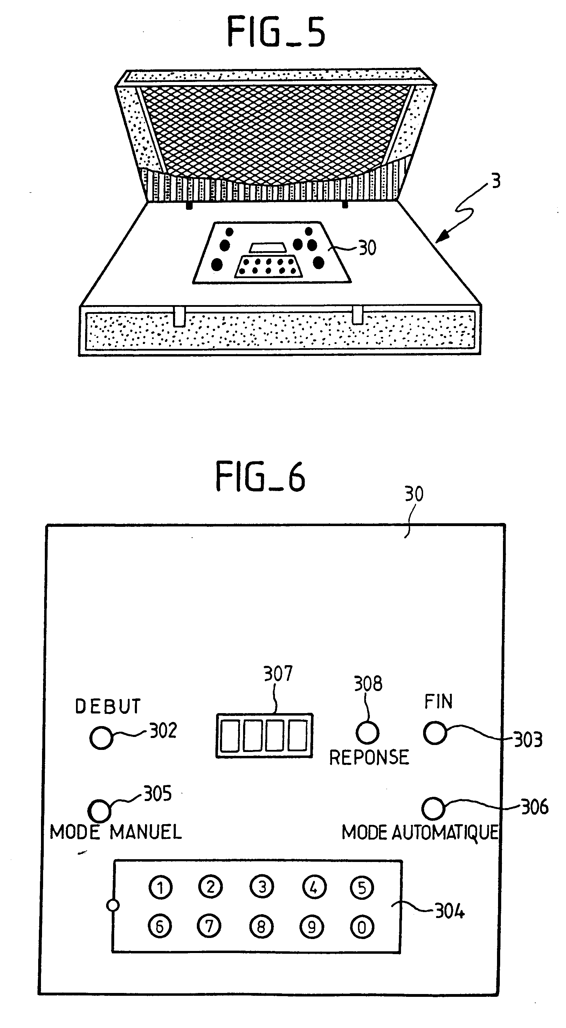

- la figure 5 montre l'appareil de commande de l'appareillage selon l'invention, en position ouverte, et
- la figure 6 montre la face de commande de l'appareil de la figure 5.

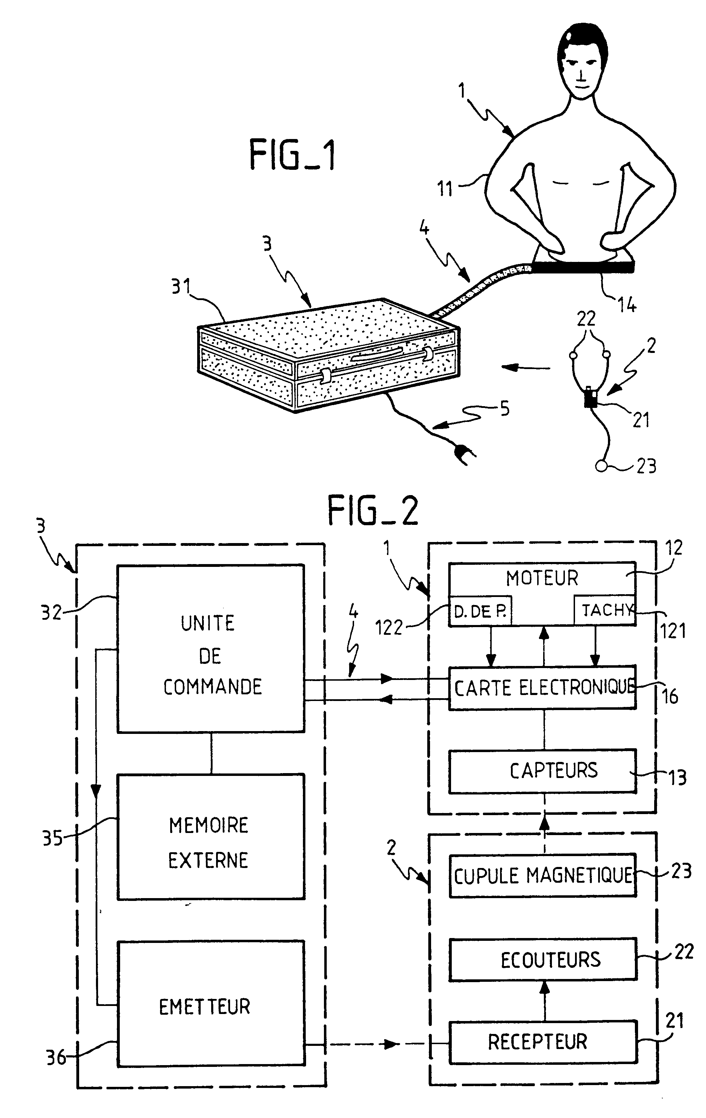

L'appareillage représenté sur la figure 1 comprend un mannequin 1 dont une partie reproduit extérieurement approximativement la moitié supérieure d'un corps humain supposée appartenir à un patient consultant en vue d'un examen pulmonaire, un simulateur de stéthoscope 2 et un appareil de commande 3. L'appareil est inclus dans un coffret représenté fermé, c'est-à-dire en position de non-fonctionnement ; il est relié au mannequin par un cordon de liaison électrique 4 à cinq conducteurs, et au réseau électrique par un unique cordon d'alimentation 5.

Le mannequin 1 comporte une structure rigide pour soutenir (à la manière des os et des muscles) une enveloppe 11 en matériau souple et élastique imitant la texture de la peau humaine (silicone coloré chair renforcé sauf en certains endroits par une couche de résine stratifiée) ; le réalisme est amélioré par des touches de peinture silicone simulant les yeux, la bouche, les ongles, etc., et la simulation d'une partie du système pileux (cheveux, sourcils) au moyen de postiches. A l'intérieur du mannequin, dans la région du torse de celui-ci, sont logés un ou plusieurs dispositif(s) moteur(s) 12 pour déplacer des zones de l'enveloppe en matériau souple rendues mobiles par des discontinuités du renfort de manière que leur animation simule les mouvements dus à la respiration ; ces dispositifs moteurs 12 comprennent ici un moteur à courant continu asservi en vitesse, s'articulant sur une liaison pivot ; ce moteur est lié à un système d'embiellage comprenant une bielle qu'il tend à entraîner en rotation, et qui est guidée en rotation sur l'une des coques de renfort du mannequin en résine stratifiée ; il en résulte un mouvement d'oscillation du moteur entraînant une coque ventrale ; le mouvement simulant le rythme respiratoire au moyen de mouvements oscillatoires de soulèvement et d'abaissement du ventre du mannequin est synchronisé avec les sons supposés émis par la zone pulmonaire supposée auscultée de manière à simuler le rythme respiratoire, et cela sans perturbation du diagnostic sonore ; à cet effet, la commande du moteur est assurée par un dispositif d'asservissement à deux boucles contrôlées respectivement par une génératrice tachymétrique 121 calée sur l'arbre du moteur et par un détecteur de position 122. Au voisinage immédiat de la paroi interne de l'enveloppe en matériau souple, sont disposées des plaques amovibles de capteurs de proximité 13 par exemple des interrupteurs électromagnétiques à lames souples connus sous le nom d'interrupteurs Reed. Cette partie correspondant approximativement à la moitié supérieure d'un corps humain est portée par un socle 14 muni d'au moins un connecteur électrique 15 dont les broches sont reliées respectivement aux dispositifs moteurs 12 pour les alimenter, et aux capteurs de proximité 13 pour recevoir l'indication de leur état, par l'intermédiaire d'une carte électronique 16 dont des circuits logiques explorent les capteurs de manière à transmettre à l'unité de commande des signaux de proximité correspondant aux capteurs excités et portant éventuellement une partie du dispositif d'asservissement du moteur.

Le simulateur de stéthoscope 2, que l'on appellera dans la suite "stéthoscope", est en fait un récepteur par exemple radioélectrique pour haute fréquence, constitué d'un appareil récepteur 21 auquel sont reliés électriquement un ou plusieurs (généralement deux) écouteurs 22 réalisés selon une technique conventionnelle (transducteurs électroacoustiques) ; à l'appareil 21, est solidarisée mécaniquement une cupule d'auscultation 23 munie d'un organe destiné à coopérer avec les capteurs 13, par exemple contenant une barrette ou comprenant une cuvette 23 ferromagnétiques, ici un aimant, de telle sorte que le fait d'approcher la cupule des capteurs de proximité 13 provoque l'excitation d'au moins le plus proche d'elle, par exemple la fermeture de l'interrupteur dans le cas d'interrupteurs Reed, traduite par la production d'un signal de proximité comme indiqué plus haut ; l'appareil récepteur est alimenté par des batteries, rechargeables, via une prise d'alimentation, par un chargeur logé dans le coffret de l'appareil de commande 3 ; un potentiomètre de volume à interrupteur permet de régler le niveau sonore et de mettre en et hors service cet appareil récepteur.

Le coffret de l'appareil de commande 3 est constitué par une mallette 31 de faibles dimensions (quelques décimètres cube) contenant principalement une unité de commande 32 comportant une carte automatisme et son numérique supportant et à laquelle sont reliés électriquement divers composants de cette unité de commande, des unités de mémoire externe EPROM 35 reliées à et supportées par la carte automatisme et son numérique, et une carte son analogique constituant un émetteur 36 ici radioélectrique de haute-fréquence également reliée électriquement à l'unité de commande, ainsi que les alimentations nécessaires ; l'appareil comporte au moins deux connecteurs 37, 38 l'un pour le branchement du cordon de liaison électrique 4 et dont les broches sont reliées à l'unité de commande pour lui transmettre les signaux de proximité et pour en recevoir des signaux d'actionnement des dispositifs moteurs du mannequin, et l'autre pour le branchement du cordon d'alimentation 5, un interrupteur d'alimentation 39 étant par ailleurs prévu pour ouvrir ou fermer le circuit d'alimentation de l'appareillage. Les composants appartenant à l'unité de commande, portés par la carte automatisme et son numérique, et reliés à elle, sont principalement un microcontrôleur d'automatisme gérant l'unité de commande, une mémoire interne EPROM divisée en quatre tables, et un microcontrôleur de son analogique. Les unités de mémoire externe 35, totalisant une capacité de 80M bits, sont réparties sur quatre cartes enfichables sur chacune desquelles sont stockées les données sonores échantillonnées correspondant à seize états pulmonaires (bronchite du fumeur, etc. et éventuellement un ou plusieurs sujets sains) ; ainsi, pour chaque pathologie, est stocké un groupe de cinq sons échantillonnés à une fréquence de l'ordre de 8 kHz à 16 kHz, qui ne sont autres que les bruits pulmonaires audibles au moyen d'un véritable stéthoscope sur les cinq lobes pulmonaires d'un patient, enregistrés "in vivo" ; chaque bruit de respiration correspond à un ou deux cycles inspiration-expiration stockés sur quelques dizaines de kilo-octets de mémoire, que l'on répète lors de leur reproduction, par bouclage, pendant le laps de temps désiré. Les quatre tables de la mémoire interne EPROM sont destinées respectivement à contenir l'ordre des cinq zones de mémoire des sons de la pathologie sélectionnée, à effectuer un double tri et une gestion de conflits en fonction du résultat de l'exploration des capteurs, à contenir la valeur de la tension correspondant à la vitesse du moteur, et à contenir la longueur de la boucle sonore à effectuer en fonction de la durée des sons enregistrés dans le cas de la pathologie sélectionnée (définie par le nombre de pas que doivent effectuer les mémoires avant d'être remises à zéro par un dispositif prévu à cet effet comme cela sera décrit plus loin). L'entrée de la table de tri et de gestion des conflits est reliée à la sortie d'une logique de capteurs elle-même reliée au mannequin, tandis que sa sortie commande un sélecteur de zone en sortie de la mémoire des sons et un sélecteur de présence du stéthoscope en cascade ; la vitesse du moteur est asservie à une consigne lue en table, dépendante de la durée du cycle son ; la table contenant la longueur de la boucle est également reliée au dispositif de remise à zéro, dont une sortie est reliée à une entrée de remise à zéro d'un compteur associé à un sélecteur aléatoire de pathologie relié aux unités de mémoire des sons 35. La mémoire interne est par ailleurs reliée à un clavier de sélection d'état à simuler. La sortie des unités de mémoire des sons 35 est reliée, via le sélecteur de zones et le sélecteur de présence du stéthoscope, au microcontrôleur de son analogique, comprenant une logique de demande d'octet et un convertisseur numérique/analogique ; la sortie de la logique de demande d'octet est reliée à une entrée d'incrémentation du compteur, et la sortie du convertisseur est reliée à l'entrée de la carte son analogique 36 ; la sortie d'un générateur de silence est également reliée à l'entrée du microcontrôleur de son analogique via le sélecteur de présence du stéthoscope. Un connecteur, relié à l'unité de commande 32, permet le raccordement de mémoires EEPROM pour l'enregistrement des informations des tables de la mémoire interne, à savoir les informations sur les correspondances de zones, la vitesse du moteur, et la longueur de la boucle. La carte son analogique constituant l'émetteur 36 est reliée à l'unité de commande, et plus précisément à la sortie du convertisseur numérique/analogique, pour en recevoir un signal analogique de données sonores élaboré par elle à partir du groupe de données sonores qu'elle a reçues de l'unité de mémoire 35 en fonction des instructions de commande également élaborées par elle en fonction de la provenance des signaux de proximité ; cet émetteur comprend en entrée un filtre passe-bas, ici du cinquième ordre, pour lisser le signal et couper les fréquences supérieures à la moitié de la fréquence d'échantillonnage, dont le signal analogique de données sonores de sortie attaque d'une part au moins un étage haute-fréquence pour le moduler, suivi d'une antenne d'émission télescopique ou cachée, et d'autre part des circuits menant à des prises de sortie respectivement pour un émetteur à infra-rouges, pour un casque audio conventionnel, et pour un oscilloscope.

Plus précisément, le demi-corps humain (torse, visage, bras) du mannequin, approximativement aux dimensions humaines, est disposé vertical sur son socle 14, et les bras sont fléchis de telle sorte que les mains soient fixées sur les hanches pour dégager les zones d'auscultation notamment dans la région des aisselles. Le torse du mannequin est subdivisé à l'avant et à l'arrière en cinq zones correspondant sensiblement aux deux lobes de gauche et aux trois lobes de droite des poumons gauche et droit humains, respectivement, assez nettement différenciés en ce qui concerne les bruits de respiration émis. Les capteurs 13, eux, sont répartis en quatre plaques (deux à l'avant respectivement à gauche et à droite et deux à l'arrière respectivement à gauche et à droite), les deux plaques de gauche, simulant le poumon gauche, étant divisées chacune en deux zones, et les deux plaques de droite, simulant le poumon droit, chacune en trois zones. Les plaques dans lesquelles sont implantés les relais Reed sont composites et constituées d'une couche de résine stratifiée et d'une couche en mousse ; dans chaque zone, les relais Reed sont reliés en parallèle ; les dix zones aboutissent chacune sur un opto-coupleur-déclencheur auquel est branchée une résistance d'excursion haute.

Le rôle de l'appareil de commande 3, et plus particulièrement de l'unité de commande 32, est d'élaborer des signaux électriques permettant d'imiter aussi fidèlement que possible les bruits de respiration et les mouvements abdominaux, lorsqu'ils sont appliqués respectivement à l'émetteur 36 et aux dispositfs moteurs d'animation 12 du mannequin 1, et cela pour tous les états, syndromes cliniques ou non, dont les données sonores sont stockées en mémoire 35, les bruits et mouvements en question étant variables en fonction de l'état simulé et de l'emplacement de l'auscultation.

Grâce aux faits que le mannequin 1 comporte des plaques de capteurs 13 divisées en zones dont l'emplacement correspond respectivement aux cinq lobes des poumons, et que les signaux de données sonores élaborés par l'unité de commande sont différents selon leur provenance, à chaque état correspondent bien des bruits d'auscultation différents en fonction du (ou des) capteur(s) excité(s) ; naturellement, il est préférable que le nombre des capteurs soit important, de telle sorte que la cupule 23 puisse, en étant appliquée indifféremment à tout endroit du thorax, que ce soit sa face antérieure, postérieure, ou une face latérale, provoquer l'émission des signaux de données sonores et d'actionnement des dispositifs moteurs ; ici, il y a au total trois cent cinquante capteurs et avantageusement, comme on l'a vu, ces capteurs 13 sont regroupés en cinq paires de zones de capteurs disposés en réseau, chaque paire de zones correspondant à l'un des lobes pulmonaires, ce qui permet de déterminer avec précision l'emplacement le plus proche de la cupule.

Le dispositif d'asservissement à deux boucles mentionné plus haut permet au moteur de "suivre" le cycle des inspirations et des expirations de la manière suivante : à chaque pathologie, est associée une vitesse telle que le moteur effectue un tour en une durée légèrement inférieure à celle d'un cycle inspiration-expiration ; puis, le moteur doit marquer un léger temps d'arrêt et repartir en synchronisme avec le son ; à cette fin, la vitesse initiale est préenregistrée dans une table. Ce dispositif d'asservissement comporte un comparateur du "temps son" correspondant à la durée d'une période des phénomènes sonores du cycle inspiration-expiration de la pathologie sélectionnée (consigne), et du "temps moteur" mesuré par le détecteur de position, de manière à conserver le léger temps d'arrêt mentionné plus haut ; si le "temps moteur" devient supérieur au "temps son", le dispositif d'asservissement arrète le moteur jusqu'à la fin du cycle inspiration-expiration en cours, et le re-démarre avec une vitesse supérieure, ce qui referme l'une des boucles de l'asservissement ; la sortie de la génératrice tachymétrique est elle-même appliquée à une entrée du dispositif d'asservissement, ce qui referme l'autre boucle. La carte électronique portant ce dispositif d'asservissement est alimentée par une tension de + 12 volts à + 30 volts, et pilotée par une tension variable de 0 à quelques volts.

L'appareil 3 comporte un tableau de commande 30 muni de poussoirs 302, 303 de démarrage et d'arrêt de la simulation, du clavier numérique 304 de sélection d'état à simuler constitué de dix touches numérotées de 0 à 9 pour composer le numéro d'appel de l'état choisi à reproduire sur le mannequin, et des poussoirs de commande 305, 306 de mode de fonctionnement permettant soit d'utiliser le clavier pour appeler l'état choisi, soit de laisser l'appareil de commande et plus exactement l'unité de commande choisir de manière aléatoire un état dans la bibliothèque d'états sélectionnables pour une auto-évaluation des connaissances de l'utilisateur. Un écran de visualisation 307 à caractères numériques relié directement au bus de données permet, par actionnement d'un poussoir de visualisation 308, la visualisation du numéro de l'état pulmonaire sélectionné. Les poussoirs et les touches du clavier sont électro-luminescents de telle sorte que ceux allumés à un moment donné soient les seuls valides et correspondent à une demande d'information à ce moment donné. Les poussoirs, le clavier, et l'écran de visualisation sont reliés électriquement à et supportés par la carte automatisme et son numérique.

Le connecteur destiné au branchement d'un émetteur à rayonnement infra-rouge conventionnel permet l'utilisation de casques à infra-rouge également conventionnels portés par les membres d'une assistance pouvant être nombreuse, de manière que toute cette assistance puisse écouter simultanément les bruits de respiration correspondant à l'état sélectionné. Avantageusement, le coffret peut également comporter un connecteur supplémentaire pour sortir des signaux pour la synchronisation de l'appareillage avec un matériel audiovisuel tel qu'un projecteur de diapositives.

Le coffret est par ailleurs aménagé pour le logement de l'émetteur haute-fréquence.

Pour mettre en oeuvre cet appareillage, lorsque le mannequin 1 est relié à l'appareil de commande 3 lui-même relié au réseau d'alimentation en énergie, on procède à l'actionnement de l'un des deux poussoirs de commande 305, 306 de mode de fonctionnement, en vue de choisir soit un fonctionnement manuel avec sélection au moyen du clavier numérique 304, soit un fonctionnement aléatoire décidé par l'unité de commande. Lorsque la sélection manuelle ou automatique est effectuée, on "lance" la simulation de l'état pulmonaire sélectionné en appuyant sur le poussoir de démarrage 302, ce qui entraîne la visualisation automatique du numéro de cet état pulmonaire en cas de sélection manuelle, l'élaboration des signaux de données sonores, la simulation des mouvements de respiration, et la possibilité de visualiser le numéro de l'état pulmonaire sélectionné par l'unité de commande en appuyant sur le poussoir de visualisation 308 si l'on a choisi le mode de fonctionnement aléatoire. Si on applique la cupule 23 du simulateur de stéthoscope 2 contre l'une des dix zones de capteurs, on obtient aussitôt dans les écouteurs, par suite de l'émission de l'onde porteuse à haute fréquence modulée par le signal de données sonores correspondant au lobe pulmonaire choisi, et de la démodulation réalisée par le récepteur, le bruit associé à l'état pulmonaire sélectionné, jusqu'à ce que la cupule soit éloignée du mannequin éventuellement pour être rapprochée d'une autre zone, ou que le poussoir 303 d'arrêt de la simulation soit actionné, éventuellement pour passer à une autre sélection. Dans l'hypothèse d'une assistance nombreuse, on branche au connecteur approprié du coffret de commande, un émetteur d'infra-rouge que l'on module ainsi par le signal analogique de données lissé, issu du filtre passe-bas, et chaque porteur d'un casque à infra-rouge peut percevoir le même bruit associé à l'état sélectionné.

En effet, lors de l'actionnement du poussoir de commande 305 manuelle, et du clavier de sélection 304, ou du poussoir de commande automatique 306, le numéro de l'état pulmonaire sélectionné au moyen du clavier ou du sélecteur aléatoire d'état est envoyé au microcontrôleur d'automatisme. Trois des quatre tables de la mémoire interne sont alors sollicitées pour délivrer leurs informations en fonction de ce numéro de manière à créer le bouclage approprié, le compteur étant constamment incrémenté par des demandes de lecture venant du microcontrôleur de son analogique ; le compteur incrémentant à son tour l'unité de mémoire des sons, le processus se poursuit en ce qui concerne les données du groupe correspondant à la pathologie sélectionnée, et l'incrémentation du compteur ; lorsque le nombre de pas mémorisés dans la table de la mémoire interne contenant la longueur de la boucle est atteint, le compteur est remis à zéro par le circuit de remise à zéro ; le compteur, toujours incrémenté par le microcontrôleur de son analogique reprend la lecture de l'unité de mémoire des sons au début et lance une nouvelle boucle, et ainsi de suite. Dés que l'utilisateur a appuyé sur le poussoir de démarrage 302, commencent l'asservissement de la vitesse du moteur au bouclage sonore, comme cela a déjà été décrit, et éventuellement l'asservissement des sons émis par l'émetteur à haute-fréquence aux zones auscultées ; comme on l'a vu, des moyens sont prévus pour gérer d'éventuels conflits à cet égard : si aucun capteur ne témoigne d'une auscultation, la table de gestion des conflits, via le sélecteur de présence du stéthoscope, aiguille le générateur de silence vers le microcontrôleur de son analogique, et aucun son n'est audible dans le stéthoscope ; en revanche, si une ou plusieurs zones sont auscultées, elle effectue une gestion afin de ne prendre en compte qu'une seule zone, elle associe cette zone, par le biais du sélecteur de zone, aux données du groupe de données associé à l'état pulmonaire et mémorisé, relatif à cette zone, et elle aiguille ces données, au moyen du sélecteur de présence du stéthoscope et via le sélecteur de zone, sur le microcontrôleur de son analogique. Le microcontrôleur de son analogique reçoit, par le bus de données, deux signaux codés sur quatre bits ; grâce à un algorithme interne, il transpose chacun de ces deux signaux d'abord sur dix bits, puis il transforme le signal numérique codé sur dix bits en un signal analogique en "marches d'escalier" ; le filtre passe-bas réalise le lissage et coupe les fréquences supérieures à la moitié de la fréquence d'échantillonnage ; le signal analogique de données sonores résultant est appliqué à l'émetteur, et détecté dans le stéthoscope.

On notera qu'à la sélection d'un état pulmonaire, sont associés la lecture de cinq emplacements de mémoire en boucle, et la détermination de la longueur de la boucle et de la vitesse du moteur, mais que ce n'est que l'actionnement du poussoir de démarrage qui déclenche d'asservissement des sons des zones auscultées sur le mannequin et celui de la vitesse du moteur (déterminée par une base de temps moteur) à la cadence des "bouclages son" (base de temps sonore).

Mais, bien entendu, l'invention n'est pas limitée à la forme de réalisation ci-dessus décrite et représentée, et on pourra en prévoir d'autres formes sans sortir de son cadre.

## Revendications

**1 -** Appareillage de simulation d'états respiratoires pathologiques ou non, caractérisé en ce qu'il comprend un mannequin (1) reproduisant extérieurement approximativement la moitié supérieure du corps d'un patient, un simulateur de stéthoscope (2) muni d'au moins un écouteur (2) et d'une cupule (23) reliés à un appareil récepteur (21) d'un rayonnement porteur de signal, et au moins un appareil de commande (3) relié électriquement au mannequin (1), en ce que le mannequin (1) comporte une enveloppe (11) en matériau souple et élastique simulant la peau du patient, au moins un dispositif moteur (12) pour animer le mannequin en déplaçant au moins une zone de l'enveloppe (11) en matériau souple, et des capteurs (13) disposés sous l'enveloppe pour détecter la proximité de la cupule (23), en ce que la cupule (23) comporte au moins un organe adapté à coopérer avec les capteurs (13) de sorte qu'au moins le capteur le plus proche de la cupule déclenche la transmission d'un signal de proximité à l'appareil de commande (3), et l'écouteur (22) est un transducteur électroacoustique relié électriquement à l'appareil récepteur (21), en ce que l'appareil de commande (3) comprend une unité de commande (32), au moins une unité de mémoire (35) dans laquelle sont stockés des groupes de données sonores associés chacun à un état respiratoire reliée électriquement à l'unité de commande pour lui délivrer, en fonction d'instructions de commande, un groupe de données sonores correspondantes, et un émetteur (36) de rayonnement porteur de signal également relié électriquement à l'unité de commande pour en recevoir un signal de données sonores élaboré par elle à partir du groupe de données sonores qu'elle a reçues, et en ce que l'unité de commande (32) est reliée au mannequin (1) pour en recevoir le signal de proximité, et en fonction de sa provenance, élaborer le signal de données sonores destiné à l'émetteur (36), et délivrer au mannequin (1) un signal d'actionnement du dispositif moteur (12) élaboré à partir des données sonores.

**2 -** Appareillage selon la revendication 1, caractérisé en ce que l'émetteur (36) et le récepteur (2) sont du type haute-fréquence.

**3 -** Appareillage selon la revendication 1, caractérisé en ce que la cupule (23) et les capteurs (13) constituent un ensemble de détection électromagnétique.

**4 -** Appareillage selon la revendication 1, caractérisé en ce que les capteurs (13) du mannequin (1) sont répartis en dix zones.

**5 -** Appareillage selon la revendication 1, caractérisé en ce que l'appareil de commande (3) comporte un connecteur de liaison recevant un signal de données sonores, destiné à être relié à un émetteur d'infra-rouge.

**6 -** Appareillage selon la revendication 1, caractérisé en ce que l'appareil de commande (3) comporte un connecteur de liaison recevant des données de synchronisation, destiné à être relié à un appareil audio-visuel.

**7 -** Appareillage selon la revendication 1, caractérisé en ce qu'il comporte des moyens de commande de mode de fonctionnement et de sélection manuelle (305, 304) d'un état pulmonaire.

**8 -** Appareillage selon la revendication 1, caractérisé en ce qu'il comporte des moyens de commande de mode de fonctionnement et de sélection aléatoire (306) d'un état pulmonaire.

**9 -** Appareillage selon la revendication 1, caractérisé en ce qu'il comporte des moyens de visualisation de diagnostic (307).

**10 -** Appareillage selon la revendication 1, caractérisé en ce que l'appareil de commande (32) comporte, reliés en cascade à la sortie de l'unité de mémoire (35), un sélecteur de zone et un sélecteur de présence du stéthoscope, commandés par une mémoire interne, la sortie du sélecteur de présence du stéthoscope étant reliée à l'émetteur (36) par l'intermédiaire d'un microcontrôleur de son analogique comprenant un convertisseur numérique/analogique.
